# EUROPEAN PATENT APPLICATION

(11) **EP 4 311 721 A1**
(43) Date of publication of application: **31.01.2024**
(21) Application number: 22187557.8
(22) Date of filing: 28.07.2022
(51) Int. Cl.: B60N 2/18, B60N 2/02

(54) **MOVEMENT DEVICE OF A SEAT FOR A VEHICLE**

(71) Applicant: C.O.B.O. S.p.A., 25024 Leno (BS) (IT)
(72) Inventor: Agostini, Mauro, 42015 Correggio, Reggio Emilia (IT)
(74) Representative: Luppi Intellectual Property S.r.l.

(57) **Abstract**

A movement device is disclosed that is usable for varying the tilt of a seat, for example of a manoeuvring seat of a telescopic lifter, with a support (3) that carries the seat and that is movable with the possible of adopting at least one driving position, in which an operator on the seat is in a suitable position for driving the vehicle, and at least one work position, in which the seat is reclined backwards to facilitate an upward view for the operator, and with a toggle-joint mechanism (5) that is hinged on a movable element (6) of an actuator (4) and that comprises two connecting rods that are articulated on one another and one of which is hinged on the support (3) and the other of which is hinged on a base (2) with which the support (3) is slidingly coupled.

## Description

### Background of the invention

The invention relates to a movement device of a seat for a vehicle, in particular for a movable work machine.

Specifically, but not exclusively, the invention can be used to vary the tilt of a manoeuvring seat of a telescopic lifter.

The prior art comprises movable work machines with driving seats that recline backwards to enable the operator to have an upward view without tilting the neck backwards. Patent publications US 2007/0241583 A1 and DE 20109218 U1 show two examples of solutions with a reclinable seat.

Various aspects of the prior art are improvable.

Firstly, it is desirable to make a device with an actuator to drive the movement of the seat of the vehicle, in which the mechanical stress applied to the actuator is relatively reduced.

Secondly, it is desirable to obtain a precise and reliable positioning of the seat, in particular in the driving position of the seat.

It would also be opportune to obtain a movement of the seat, from the driving position (substantially horizontal) to the work position (tilted backwards), that is particularly ergonomic, i.e. in which the sensation of discomfort due to the movement of the seat is reduced for the operator.

### Summary of the invention

One object of the invention is to provide a device that is able to overcome one or more of the aforesaid limits and drawbacks of the prior art.

One object is to provide a movement device of a seat for a vehicle that is an alternative to those of the prior art.

One advantage is to make available a movement device with an actuator for moving the seat, in which the mechanical stress on the actuator is relatively reduced, in particular during the steps of driving the vehicle like, for example, during a seatbelt pull test.

One advantage is to permit precise and reliable positioning of the seat, in particular in the (horizontal) driving position of the seat.

One advantage is to obtain a movement of the seat from a driving position of the vehicle to a work position in which the variation in a vertical direction of the two ends of the seat and/or the overall movement of the back of the seat backwards in a horizontal direction is reduced.

One advantage is to move the seat by a rotation around a rotation axis that is positionable so as to reduce the disturbing effects caused by the rotation itself on the seated operator.

One advantage is to make a movement device of a seat for a vehicle that is constructionally simple and cheap.

One advantage is to improve work ergonometrics of an operator by a relatively inexpensive tilting system for tilting the seat.

Such objects and advantages, and still others, are achieved by a device according to one or more of the claims below.

In one embodiment, a movement device, in particular for varying a tilt of a manoeuvring seat of a vehicle, comprises a support that is configured to carry the seat and is movable with the possibility of adopting at least one driving position, in which an operator is in a suitable position for driving the vehicle, and at least one work position, in which the seat is reclined backwards to facilitate an upward view for the operator, and a toggle-joint mechanism that is hinged on a movable element of an actuator and that comprises two connecting rods that are articulated on one another and one of which is hinged on the support and the other of which is hinged on a base with which the support is slidingly coupled.

### Short description of the drawings

The invention can be better understood and implemented with reference to the attached drawings that illustrate one embodiment by way of non-limiting example, in which:

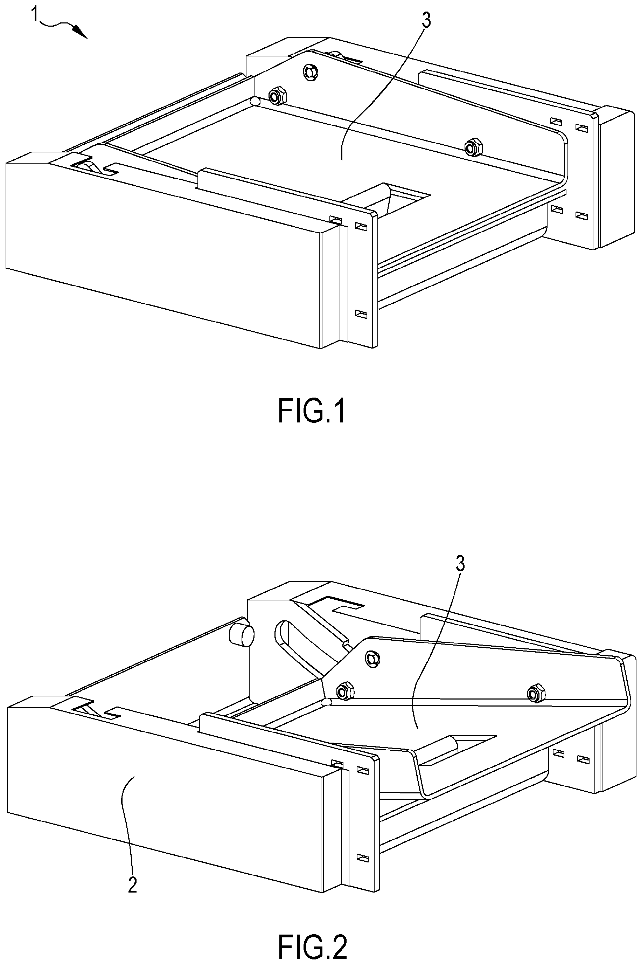

figure 1 is a perspective view of a first example of a movement device made according to the present invention in a driving position;
figure 2 shows the device illustrated in figure 1 in a work position;
figure 3 illustrates a seat unit that comprises the device of figure 1 in the driving position;
figure 4 shows the seat unit of figure 3 tilted in the work position;

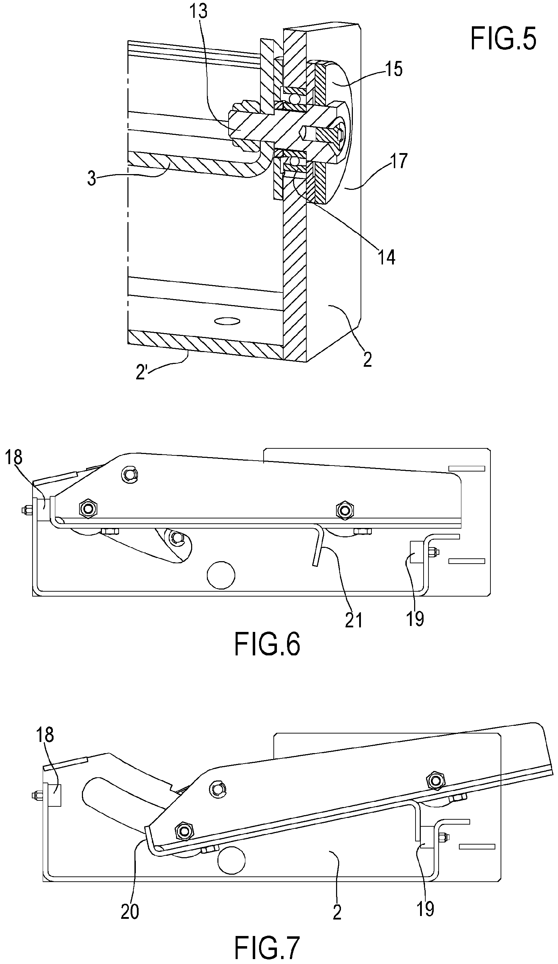

figure 5 shows a partially sectioned perspective view of the device of figure 1;
figure 6 is a side view in vertical elevation of the device of figure 1 in the driving position in which some components have been removed to better show others;
figure 7 shows the view of figure 6 in the work position;
figure 8 is a side view of a detail of the device according to a second embodiment that shows a toggle-joint mechanism and an actuator in the driving position;
figure 9 shows the detail illustrated in figure 8 in the work position;
figure 10 is a perspective view of the movement device of figure 1 in the driving position;
figure 11 is a perspective view of the movement device of figure 10 in the work position;
figure 12 is a perspective view of a third embodiment of a movement device in the driving position, made in accordance with the present invention.
figure 13 is a side view in vertical elevation of the movement device of figure 12 in which some components have been removed for greater clarity.

### Detailed description

With reference to the aforesaid figures, overall with 1 a movement device for moving a seat unit H for a vehicle has been indicated. The vehicle can comprise, in particular, a movable work machine. The movement device 1 can be used, in particular, to vary the tilt of a manoeuvring seat of a telescopic lifter.

The movement device 1 comprises a base 2, a support 3 and an actuator 4.

The support 3 is configured to carry the seat unit H.

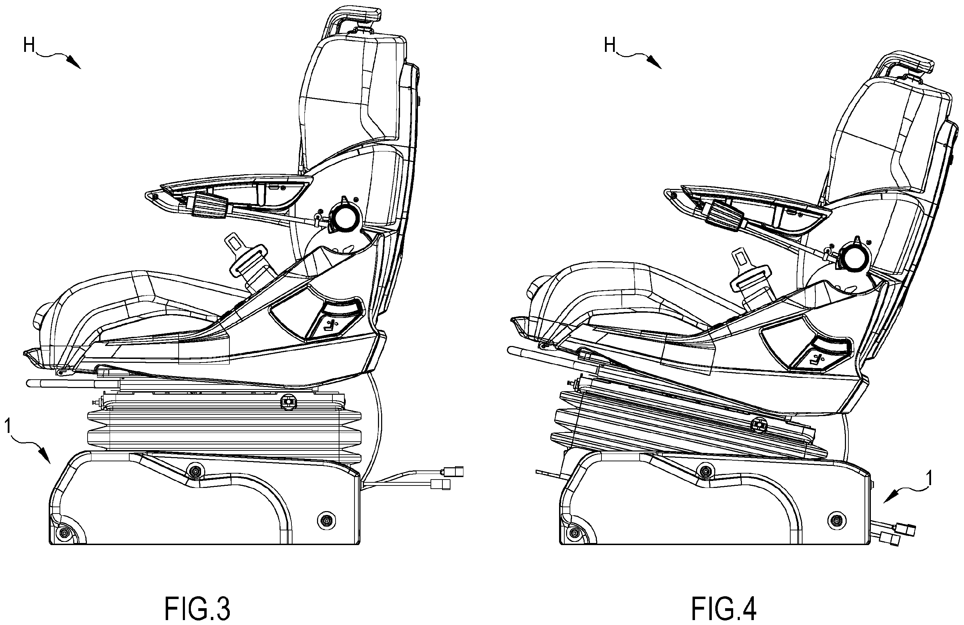

The support 3 is movable with respect to the base 2 with the possibility of adopting at least one driving position (figure 3), in which an operator sitting on the seat unit H is in a position that is suitable for forward vision (for example a position with the seat substantially horizontal), for example for driving the vehicle, and at least one work position (figure 4), in which an operator sitting on the seat unit H is in a suitable position for upward vision being reclined backwards with respect to the aforesaid suitable position (horizontal) for forward vision.

The actuator 4 is configured to control the movements of the support 3 at least between the aforesaid driving and work positions.

The movement device 1 comprises a toggle-joint mechanism 5 to connect a movable element 6 of the actuator 4 to the support 3.

The toggle-joint mechanism 5 comprises a first connecting rod 7 and a second connecting rod 8 articulated with one another by a first hinge 9.

The first connecting rod 7 is hinged on the support 3 by a second hinge 10.

The second connecting rod 8 is hinged on the base 2 by a third hinge 11.

The toggle-joint mechanism 5 is connected to the movable element 6 of the actuator 4 by a fourth hinge 12.

The support 3 is coupled slidably with the base 2 along a curved sliding path. The curved sliding path can be, in particular, in the shape of a circumference arc.

In particular, the support 3 is slidable along the aforesaid sliding path by a pin-slot coupling. More in particular, the support 3 slides with respect to the base 2 along guide means. The guide means comprises a slot 16.

The pin-slot coupling can comprise, in particular, a pin 13, a rotation support 14 and a side guide body 15.

The pin 13 is fixed to the support 3 (for example, by a screw fixture) and is inserted into the slot 16. The slot 16 can be curved (in the shape of a circumference arc) obtained on a wall 17 of the base 2 to define the aforesaid curved sliding path.

According to one embodiment that is not illustrated the sliding path can be linear.

According to one embodiment that is not illustrated the slot 16 can be linear to define the linear sliding path.

The wall 17 is arranged on a plane that is substantially perpendicular to a fixing wall 2' of said base 2. The fixing wall 2' has a plate structure that extends on a reference plane along two main dimensions with respect to a third dimension (thickness).

The rotation support 14 (for example, a rolling bearing) is arranged in the slot 16 between the pin 13 and the wall 17 of the base 2.

The side guide body 15 is fixed to the pin 13 (for example, by screw fixture means). The wall 17 is arranged between the support 3 and the side guide body 15. The side guide body 15 is configured to limit the axial movement of the rotation support 14. In other words, the side guide body 15 is configured to limit the movement of the rotation support along a direction transverse to the wall 17 and substantially parallel to the reference plane on which the fixing wall 2' extends.

The movement device 1 can comprise, in particular, four pin-slot couplings of the type disclosed above to couple the support 3 slidingly with the base 2.

In a first embodiment, in a second embodiment and in a third embodiment four pin-slot couplings are provided that are arranged two by two on two opposite sides of the support 3.

In particular, the base 2 can comprise a second wall 17', opposite the wall 17 and arranged on a plane that is substantially perpendicular to the reference plane on which the fixing wall 2' lies. On the second wall 17' at least one pin-slot coupling can be provided. For example, on the second wall 17' two pin-slot couplings can be provided.

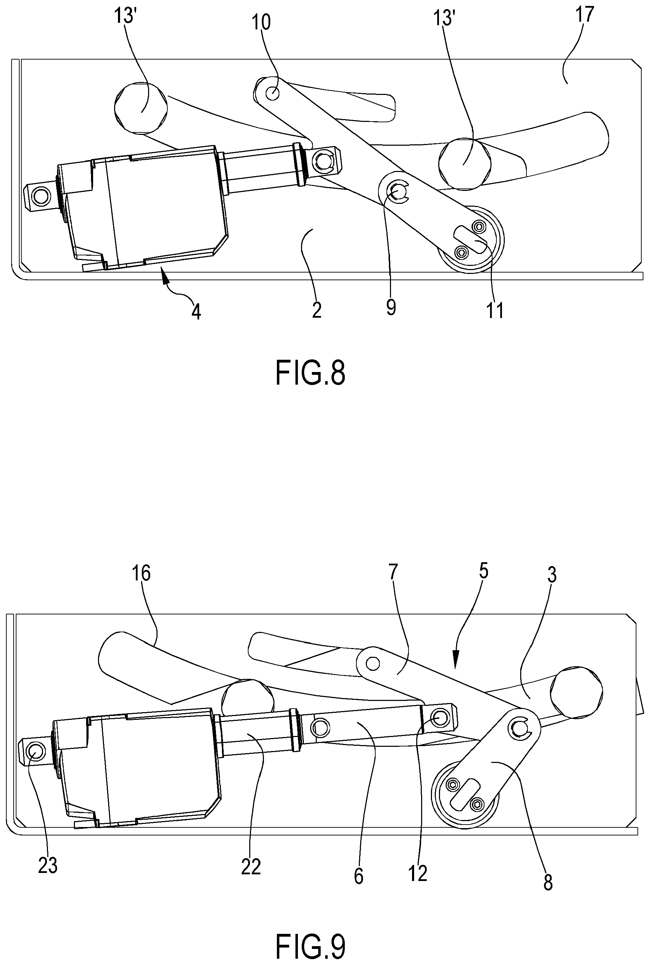

According to the second embodiment shown in figures 8 and 9, the wall 17 comprises the slot 16 inside which the rotation support 14 and a further rotation support 14' slide.

The rotation support 14 is fixed to the support 3 by the first pin 13. The rotation support 14 is arranged in the wall 17 between the support 3 and the side guide body 15.

The further rotation support 14' is fixed to the support 3 by a further pin 13'. The further rotation support 14' is arranged in the wall 17 between the support 3 and a further side guide body 15'.

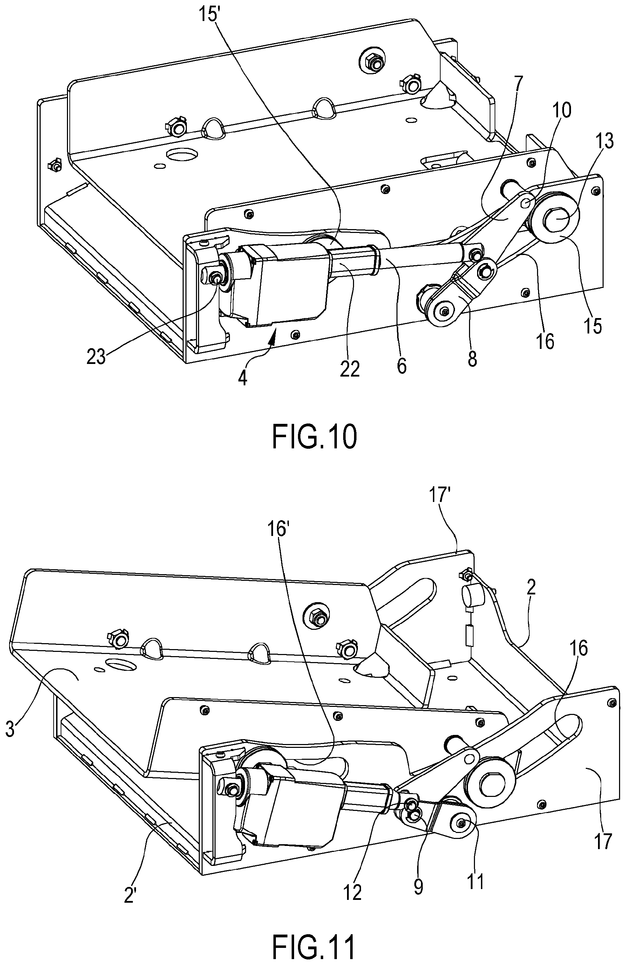

In the first and in the third embodiment, as shown in figures 10-13, the wall 17 comprises the slot 16 and a further slot 16'.

Again in the first and in the third embodiment, the slot 16 comprises a first slot end 16a and a second slot end 16b. The first slot end 16a is arranged further from the fixing wall 2' with respect to the second slot end 16b. The slot 16 extends along a first sliding path A. The first sliding path A is tilted with respect to the reference plane of the fixing wall 2'. In particular, the first sliding path A is so tilted that the straight line passing through the ends of the slot 16 intersecting the reference plane forms an acute angle. Still more in particular, the first sliding path A is so tilted that the first slot end 16a is arranged further from the fixing wall 2' and the second slot end 16b is arranged nearer the fixing wall.

The further slot 16' comprises a further first slot end 16'a and a further second slot end 16'b. The further first slot end 16'a and the further second slot end 16'b are arranged further from the fixing wall 2' with respect to the second slot end 16b.

The further slot 16' extends along a second sliding path B. The second sliding path B is so tilted that the intersection of the straight line passing through the ends of the further slot 16 intersecting the reference plane of the fixing wall 2' forms an obtuse angle. Further, this through line through the ends of the further slot 16' can be substantially parallel to the reference plane of the fixing wall 2'.

In other words, the slot 16 and the further slot 16' define respectively a first sliding path A and a second sliding path B with tilts that are different from one another with respect to a horizontal reference plane.

The slot 16 and the further slot 16' extend along circumference arcs having two different centres. The slot 16 and the further slot 16' further extend along circumference arcs having different curvature radiuses.

Also in the first and in the third embodiment, in the slot 16 the rotation support 14 slides and in the further slot 16' the further rotation support 14' slides.

The rotation support 14 is fixed to the support 3 by the pin 13. The rotation support 14 is arranged in the slot 16, in the wall 17, between the support 3 and the side guide body 15.

The further rotation support 14' is fixed to the support 3 by the further pin 13'. The further rotation support 14' is arranged in the further slot 16', in the wall 17, between the support 3 and the further side guide body 15'.

The movement device 1 comprises a first end stop 18 arranged to stop the support 3 and/or the seat unit H in the driving position.

The movement device 1 comprises a second end stop 19 arranged to stop the support 3 and/or the seat unit H in the work position.

The first end stop 18 comprises a first elastic buffer arranged to interact in contact with a first end 20 of the support 3 and/or of the seat unit H.

The second end stop 19 comprises a second elastic buffer arranged to interact in contact with a second end 21 of the support 3 and/or of the seat unit H.

According to one embodiment that is not illustrated, the second end 21 comprises the second elastic buffer arranged to interact in contact with the second end stop 19.

Using elastic buffers, that are able to act as bumpers with elastic absorption capacity, enables possible clearances in both the end stop to be recovered (or at least in one or the other of the two end stops).

A tilt variation of the support 3 and/or of the seat unit H with respect to a horizontal plane between the aforesaid driving and work positions is comprised in an interval 12.6° ± 1.5°, or in an interval 12.6° ± 1.0°, or in an interval 12.6° ± 0.5°. These intervals are purely illustrative and non-limiting. The geometries and/or the dimensions can be modified to obtain different angles.

The actuator 4 can comprise, in particular, a linear actuator with a cylinder 22 in which the aforesaid movable element 6 (rod) is slidable axially. The cylinder 22 is hinged on the base 2 by a fifth hinge 23.

In the illustrated embodiments, the actuator 4 is hinged on the wall 17. On the wall 17 the toggle-joint mechanism 5 is further provided.

In one embodiment that is not illustrated, on the second wall 17' a further actuator and a further toggle-joint mechanism can be provided. In this embodiment it is appropriate that the actuators are moved synchronously so as to reduce the risk of system getting locked.

The movement of the support 3 between the two end stops (i.e. between the guide and work positions) corresponds to a relatively reduced stroke of the movable element 6, for example by about 100 millimetres.

The fourth hinge 12 can connect, in particular, the movable element 6 to the first connecting rod 7.

The first hinge 9, the second hinge 10, the third hinge 11, the fourth hinge 12 and the fifth hinge 23 have hinge axes that are parallel to one another. In particular, the hinge axes are substantially parallel to the reference plane of the fixing wall 2'. More in particular, the hinge axes are substantially parallel to a horizontal reference plane.

As illustrated in figures 8-11, showing the first embodiment and the second embodiment, the second hinge 10 and the pin 13 can be connected to the support 3 at different points of the support. In particular, the second hinge 10 and the pin 13 can have distinct and spaced rotation axes.

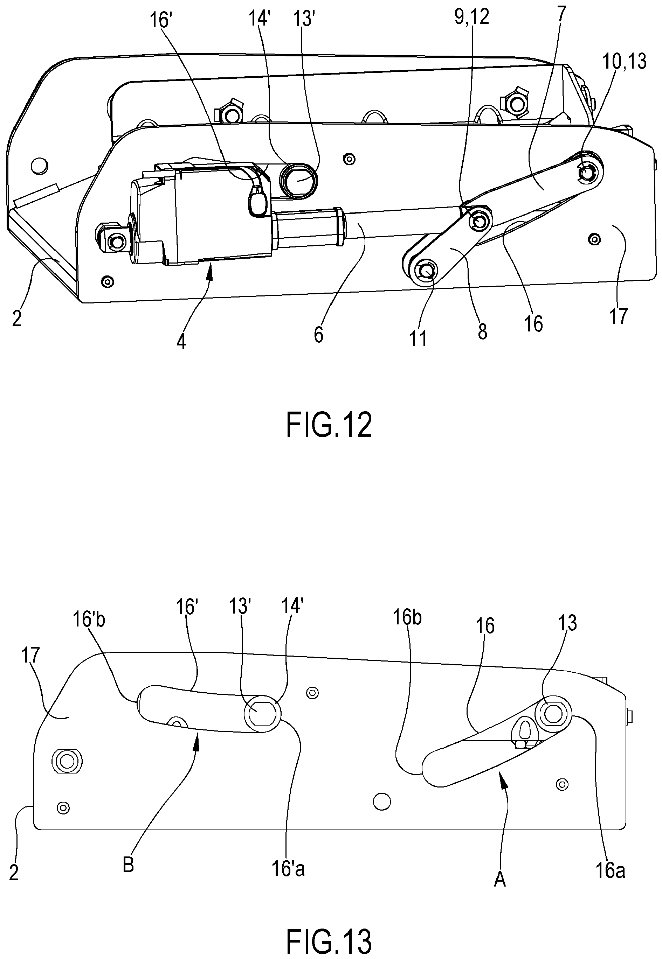

As shown in figure 12, showing the third embodiment, the pin-slot coupling can comprise the second hinge 10. In particular, the second hinge 10 and the pin 13 can be coaxial, i.e. the rotation axis thereof can coincide. More in particular, the second hinge 10 and the pin 13 can coincide.

Further, as illustrated in figure 12, the fourth hinge 12, which connects the movable element 6 to the toggle-joint mechanism 5, and the first hinge 9 can be coaxial. In particular, the first hinge 9 and the fourth hinge 12 can coincide.

According to one embodiment that is not illustrated, the base 2 can comprise a hooking seat, whereas the first connecting rod 7 can comprise a hooking tooth configured to fit in the hooking seat. In particular, the hooking tooth can fit in the hooking seat when the device 1 is in the driving position. This ensures greater stability and resistance of the seat system during a seatbelt pull test.

The movement device 1 can comprise electronic control means configured to control the tilt of the seat unit H automatically on the basis of signals coming from sensor means that detects the extension and/or the tilt of an arm of a movable work machine, in particular a telescopic lifter. In this manner, the tilt of the seat unit H can be completely automatic, avoiding constant manual adjustment of the seat for the operator, for example when the load moves from a lower point (ground level) to a higher point during lifting.

The electronic control means can be configured to control the tilt of the seat automatically on the basis of signals coming from sensor means that detects the position of the load to be moved.

In the light of what has been disclosed above, the movement device 1 according to the present invention overcomes the limits of the devices of the prior art and successfully reaches the set objects.

In fact, it has been established that the toggle-joint mechanism 5 enables the weight resting on the actuator 4 to be lightened, in particular on the motor-driven linear axis of the actuator 4. The greater stresses are absorbed, in fact, by the toggle-joint mechanism 5.

It has also been established that the sliding of the support 3 with respect to the base 2, along guide means with a sliding path that extends along a circumference arc, significantly decreases the movement perceived by the operator sitting on the seat, increasing the comfort thereof.

The movement device 1 enables the seat unit H to be tilted with a movement that comprises a rotation around a centre of rotation positioned at a relatively high vertical and horizontally centred height so as to minimize the disturbance effects of the rotation on the operator.

It is observed that the toggle-joint mechanism enables good positioning accuracy of the seat unit H to be obtained (especially in the horizontal driving position) with the actuator at the end of stroke. It has been found, in particular, that, considering two distinct seat groups, a possible difference of 1 mm of stroke of the actuator 4 corresponds to an almost insignificant difference in the tilt of the seat unit.

The particular conformation of the slots that enable the support 3 to slide with respect to the base 2, enables to limit the variation in the vertical direction of the ends (front and rear) of the seat of the seat unit H, as well as the movement to the rear part of the back of the seat unit H, accordingly permitting an appropriate tilt of the seat also in confined spaces like those available in a manoeuvring cabin.

The movement device 1 further enables the tilt of the seat unit H to be optimized, for example in function of the tilt and of the extension of the lifting arm.

The present invention also relates to a movable work machine, in particular a telescopic lifter, comprising a manoeuvring cabin and the manoeuvring cabin itself. The cabin comprises a containing frame containing the cabin and a manoeuvring seat arranged inside the frame. The tilt of the manoeuvring seat is variable by the movement device 1.

What has been said and shown in the attached drawings has been provided by way of example of the innovative features of the movement device 1 for moving a seat unit H for a vehicle.

Other modifications can be made to the various apparatus embodiments or to parts thereof without thereby falling outside the protective scope.

## Claims

1. Movement device (1) of a seat unit (H) for a vehicle, said device comprising a base (2), a support (3) and an actuator (4), said support (3) being configured to carry the seat unit (H) and being movable with respect to said base (2) with the possibility of adopting at least one driving position, in which an operator sitting on the seat unit (H) is in a position that is suitable for forward vision, for example for driving the vehicle, and at least one work position, in which an operator sitting on the seat unit (H) is in a suitable position for upward vision being reclined backwards with respect to the suitable position for forward vision, said actuator (4) being configured to control movements of said support (3) at least between said driving position and said work position, said device comprising a toggle-joint mechanism (5) configured to connect said actuator (4) to said support (3).

2. Device (1) according to claim 1, wherein said toggle-joint mechanism (5) comprises a first connecting rod (7) and a second connecting rod (8) articulated with one another by a first hinge (9), said first connecting rod (7) being hinged on said support (3) by a second hinge (10), said second connecting rod (8) being hinged on said base (2) by a third hinge (11).

3. Device (1) according to claim 1 or 2, wherein said toggle-joint mechanism (5) is connected to a movable element (6) of said actuator (4) by a fourth hinge (12).

4. Device (1) according to claim 3 as appended to claim 2, wherein said second hinge (10) and said fourth hinge (12) are coaxial.

5. Device (1) according to any one of the preceding claims, wherein said support (3) is coupled with said base (2) along a curved sliding path, in particular in the shape of a circumference arc.

6. Device (1) according to claim 5, wherein said support (3) is slidable along said sliding path by a pin-slot coupling.

7. Device (1) according to claim 6, wherein said pin-slot coupling comprises a pin (13), a rotation support (14) and a side guide body (15), said pin (13) being fixed to said support (3) and inserted into a slot (16) obtained on a wall (17) of said base (2) to define said curved sliding path, said rotation support (14) being arranged in said slot (16) between said pin (13) and said base (2), said side guide body (15) being fixed to said pin (13), said wall (17) being arranged between said support (3) and said side guide body (15); said pin (13) being, in particular, coaxial with a hinge of said toggle-joint mechanism (5).

8. Device (1) according to claim 7, wherein said wall (17) comprises said slot (16) and a further slot (16') that define respectively a first sliding path (A) and a second sliding path (B) with tilts that are different from one another with respect to a horizontal reference plane.

9. Device (1) according to claim 6 or 7 or 8, comprising four pin-slot couplings that connect said support (3) with said base (2) and that are arranged two by two on two opposite sides of said support (3).

10. Device (1) according to any one of the preceding claims, comprising a first end stop (18) arranged to stop said support (3) in said driving position and a second end stop (19) arranged to stop said support (3) in said work position.

11. Device (1) according to claim 10, wherein said first end stop (18) and second end stop (19) comprise, respectively, a first elastic buffer and a second elastic buffer arranged to interact in contact, respectively, with a first end (20) and a second end (21) of said support (3).

12. Device (1) according to any one of the preceding claims, wherein a tilt variation of said support (3) with respect to a horizontal plane between said driving and work positions is comprised in an interval 12.6° ± 1.5°, or in an interval 12.6° ± 1.0°, or in an interval 12.6° ± 0.5°.

13. Device (1) according to any one of the preceding claims, wherein said actuator (4) comprises a linear actuator with a cylinder (22) in which said movable element (6) is axially slidable, said cylinder (22) being hinged on said base (2) by a fifth hinge (23).

14. Device (1) according to any one of the preceding claims, wherein said fourth hinge (12) connects said movable element (6) to said first connecting rod (7).

15. Device (1) according to any one of the preceding claims, wherein said first hinge (9), second hinge (10), third hinge (11) and fourth hinge (12) have hinge axes that are parallel to one another.

16. Device (1) according to any one of the preceding claims, comprising electronic control means configured to control the tilt of the seat unit (H) automatically on the basis of signals coming from sensor means that detects the position of a load to be moved and/or the extension and/or the tilt of an arm of a movable work machine, in particular a telescopic lifter.

17. Manoeuvring cabin for a movable work machine, in particular for a telescopic lifter, said cabin comprising a containing frame containing the cabin and a manoeuvring seat arranged inside said frame, said manoeuvring seat comprising a movement device (1) made according to any one of the preceding claims.

18. Movable work machine, in particular telescopic lifter, comprising a manoeuvring cabin made according to claim 17.
